# EUROPÄISCHE PATENTANMELDUNG

(11) **EP 0 851 650 A2**
(43) Veröffentlichungstag der Anmeldung: **01.07.1998**
(21) Anmeldenummer: 97440130.9
(22) Anmeldetag: 15.12.1997
(51) Int. Cl.: H04M 3/42, H04Q 7/00

(54) **Verfahren zur Eingabe von Parametern in ein Gerät mit einer Anschlusseinrichtung zum Anschluss an das Fernmeldenetz, sowie Geräte hierfür**

(30) Priorität: 18.12.1996 DE 19652658
(71) Anmelder: ALCATEL ALSTHOM COMPAGNIE GENERALE D'ELECTRICITE, 75008 Paris (FR)
(72) Erfinder: Beier, Wolfgang, 71263 Weil der Stadt (DE)
(74) Vertreter: Brose, Gerhard, Dipl.-Ing.

(57) **Zusammenfassung**

Die Erfindung betrifft ein Verfahren zur Eingabe von Parametern in ein erstes Gerät (U1), das an das Fernmeldenetz (N) angeschlossen oder zumindest anschließbar ist, bei welchem Verfahren die Parameter zunächst in einem zweiten Gerät (U2) zur Eingabe in das erste Gerät (U1) aufbereitet und dann vom zweiten Gerät (U2) über das Fernmeldenetz (N) an das erste Gerät (U1) übergeben werden, bei welchem Verfahren die Übergabe der Parameter unter Einbeziehung einer im Fernmeldenetz (N) befindlichen intelligenten Einrichtung (IN) erfolgt, sowie Geräte hierfür.

## Beschreibung

Die Erfindung betrifft ein Verfahren zur Eingabe von Parametern in ein Gerät, das an das Fernmeldenetz angeschlossen oder zumindest anschließbar ist, insbesondere in ein Gerät der Verkehrstelematik oder ein Hand- oder Mobilfunktelefon, nach dem Oberbegriff des Anspruchs 1, ein Gerät, dessen Arbeitsweise von Parametern abhängt, die vorab einzugeben sind, insbesondere ein Gerät der Verkehrstelematik oder ein Hand- oder Mobilfunktelefon, nach dem Oberbegriff des Anspruchs 4 und ein Gerät mit einer Anschlußeinrichtung zum Anschluß an das Fernmeldenetz und mit Eingabemitteln zum Eingeben von Parametern, insbesondere ein festnetzseitiges Endgerät.

Durch die immer weiter fortschreitende Mikroelektronik werden die Anwendungsmöglichkeiten sehr vieler Geräte immer vielfältiger. Nahezu jedes Gerät kann heute durch individuelle Einstellungen auch an ständig wechselnde Bedürfnisse der Benutzer angepaßt werden. Die Grenzen der Anwendungsmöglichkeiten sind häufig durch die hierfür erforderlichen Einstellungen gegeben. Einerseits benötigen zusätzliche Einstellelemente, wie Tasten, Schalter und Knöpfe, auch zusätzlichen Platz. Andererseits können Einstellelemente zwar auch mehrfach verwendet werden, bedürfen dann aber entweder einer Bedienerführung oder ihre Bedienung muß auswendig gelernt werden. Insbesondere bei kleinen, leichten Geräten ergeben sich damit Schwierigkeiten.

Es ist auch allgemein bekannt, ein Gerät zum Einprogrammieren von Daten irgendwelcher Art vorübergehend mit einem anderen zu verbinden und die Programmierung von diesem aus vorzunehmen.

Aus der DE 41 30 024 C2 ist auch bekannt, sich von einer Hilfskraft, beispielsweise einer Sekretärin, in ein Funktelefon die nächste zu wählende Telefonnummer über eine bestehende Funk-Telefon-Verbindung einspielen zu lassen, woraufhin dieses Funktelefon selbsttätig diese Nummer wählt. Auf die gleiche Art können auch die zur Freigabe dieses Funktelefons erforderlichen Passwörter und andere Angaben beispielsweise vom Händler eingegeben werden. Da das Funktelefon dabei auch bedient werden muß, sind hier zwei Personen gleichzeitig tätig.

Auch die Verbindung anderer Geräte mit einem Funktelefon ist bekannt. Als Beispiel sollen hier besonders Geräte der Verkehrstelematik genannt werden. Solche Geräte, die der einfacheren Orientierung im Straßenverkehr dienen, sind in der Regel nur in Fahrzeugen der höheren Preisklassen vorhanden, in denen dann in der Regel auch ein Mobiltelefon vorhanden ist. Schon aus Platzgründen sind beide Geräte dann oft vereinigt, dann aber auch funktionell. Nicht nur der Mobiltelefonteil, sondern vor allem auch der Verkehrstelematikteil bedarf sehr vieler Einstellungen, die gerade in den vergleichsweise beengten Verhältnissen im Kraftfahrzeug problematisch sind und häufig auch zu Fehleinstellungen führen.

Gerade im Fall eines Verkehrstelematikgeräts ist es leicht ersichtlich, daß die individuellen Vorgaben oft nur am Schreibtisch unter Zuhilfenahme von Karten, Adresslisten und dergleichen, vorteilhafterweise unter Zuhilfenahme eines PCs ermittelt werden können. Es ist auch beispielsweise wünschenswert, an dem damit verbundenen Mobiltelefon, aber auch an einem unabhängigen Handfunktelefon dieselben Kurzwahlnummern verwenden zu können, wie am Telefon zuhause oder im Büro.

Der Erfindung liegt die Aufgabe zugrunde, ein Verfahren und die zu seiner Ausführung erforderlichen Geräte anzugeben, um unter Umständen auch umfangreichere Sätze von Parametern in ein solches Gerät von einem zweiten Gerät aus einzugeben, ohne daß beide Geräte gleichzeitig besetzt sein müssen.

Diese Aufgabe wird erfindungsgemäß gelöst durch ein Verfahren nach der Lehre des Anspruchs 1, ein Gerät nach der Lehre des Anspruchs 4 und ein Gerät nach der Lehre des Anspruchs 7.

Der Grundgedanke der Erfindung liegt darin, die einzugebenden Parameter zuhause oder im Büro, vorzugsweise an einem PC, einzugeben, diese dann beispielsweise ins Internet einzugeben und später von demjenigen Gerät aus abzurufen, in das sie eingegeben werden sollen.

Aus dem Zeitschriftenartikel "Kurznachrichten mit dem PC versenden" (Funkschau 17/96, S. 50-52) ist es an sich bekannt, an einem Gerät, dem PC, Information aufzubereiten und an ein anderes Gerät, beispielsweise ein Handfunktelefon oder ein Funkrufempfänger, Daten zu senden. Diese werden dort aber nur als Textnachricht zur Anzeige gebracht.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt sehr schematisch das Fernmeldenetz mit zwei erfindungsgemäßen Geräten.
- Figur 2: zeigt ein erstes Ausführungsbeispiel eines erfindungsgemäßen Geräts.
- Figur 3: zeigt ein zweites Ausführungsbeispiel eines erfindungsgemäßen Geräts.
- Figur 4: zeigt ein drittes Ausführungsbeispiel eines erfindungsgemäßen Geräts.

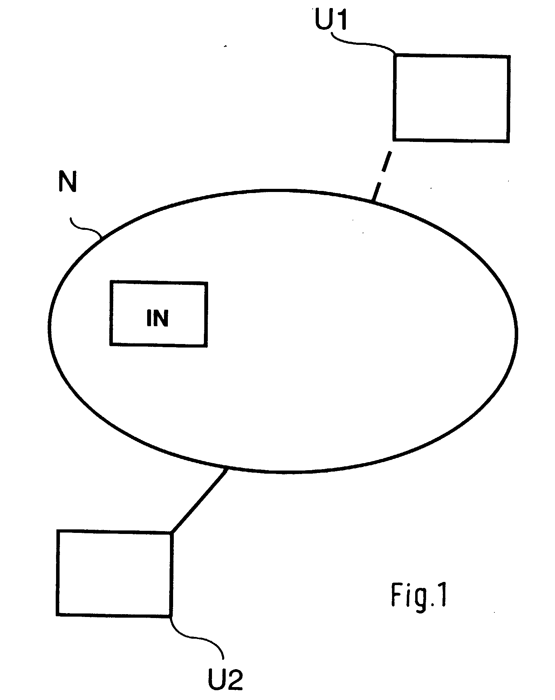

Anhand der Figur 1 wird zunächst der Grundgedanke nochmals beispielhaft erläutert.

Figur 1 zeigt das Fernmeldenetz N, ein daran zumindest vorübergehend anschließbares (gestrichelte Anschlußlinie) Teilnehmer-Gerät U1 und ein fest angeschlossenes (durchgezogene Anschlußlinie) Teilnehmer-Gerät U2. Im Fernmeldenetz N ist eine intelligente Einrichtung IN enthalten.

Das Teilnehmer-Gerät U1 ist dasjenige Gerät, dessen Parameter hier auf erfindungsgemäße Weise vorgegeben werden sollen. Beispielsweise ist es ein Gerät der Verkehrstelematik, das einem Kraftfahrzeugfahrer helfen soll, effektiv seine Ziele zu erreichen. Hierzu muß er unter anderem vorab zumindest das jeweils nächste Ziel eingeben. Möglicherweise muß er sich kurz vor Erreichen des Ziels über Mobiltelefon nochmals vorankündigen.

Selbst wenn die zur Zielvorgabe erforderlichen Parameter dem Fahrer in derjenigen Form vorliegen, in der sie in das Gerät einzugeben sind, ist das Eintippen dieser Parameter direkt am Gerät umständlich und fehlerträchtig. Das Umsetzen der dem Fahrer jeweils vorliegenden Ziel information in die tatsächlich erforderlichen Parameter ist ein weiterer Problempunkt. Soll dann auch noch ein Punkt auf der Fahrtstrecke oder ein Zeitpunkt eingegeben werden, bei dessen Erreichen eine ebenfalls schon vorab einzugebende Telefonnummer gewählt und eine Verbindung aufgebaut werden soll, so ist bereits für eine einzelne Fahrt sehr viel an Einstellung vorab zu erledigen.

Diese Einstellungen sollen nun erfindungsgemäß vorab an einem anderen Gerät, hier dem Gerät U2, erfolgen. Im gedanklich einfachsten Fall weist dieses Gerät U2 dieselben Bedienelemente und dieselbe Anordnung derselben auf wie das eigentlich zu programmierende Gerät U1, möglicherweise jedoch in vergrößerter Form. Dann kann die Eingabe am Gerät U2 zumindest bequemer und damit weniger fehlerträchtig erfolgen als am Gerät U1 selbst. Die Eingaben müssen dann nur gespeichert und in das Gerät U1 übertragen werden. Naheliegend ist davon ausgehend heutzutage die Realisierung mittels eines PCs, wobei dann im einfachsten Fall die Bedienelemente des Geräts U1 grafisch am Bildschirm in derselben Weise dargestellt werden, wie am Gerät U1 selbst. Ein weiterer Schritt ist dann die Vorgabe der Parameter unter Zuhilfenahme der vollen Möglichkeiten des PCs.

Auch wenn das Gerät U1 an das Fernmeldenetz N angeschlossen ist, wenn es eingeschaltet ist, und auch das Gerät U2 ständig am Fernmeldenetz angeschlossen sein kann, ist eine direkte Eingabe der aufbereiteten Parameter vom Gerät U2 in das Gerät U1 nicht erwünscht. Hier wird unterstellt, daß das Gerät U1 gerade dann nicht in Betrieb ist, wenn der Benutzer zu Hause oder im Büro ist, wo sich das Gerät U2 befindet. Er müßte dann zumindest vorübergehend ausschließlich zum Zwecke des Programmierens des Geräts U1 dieses und dazu möglicherweise sogar sein Fahrzeug selbst in Betrieb nehmen, unter Umständen sogar das Fahrzeug aus dem Funkschatten einer Garage herausfahren. Umgekehrt könnten zwar auch die einmal am Gerät U2 aufbereiteten Parameter vom Gerät U1 aus vom Gerät U2 abgerufen werden. Aber auch das Gerät U2 wird nicht laufend in Betrieb bleiben sollen.

Erfindungsgemäß werden nun die aufbereiteten Parameter vom Gerät U2 aus an die intelligente Einrichtung IN im Fernmeldenetz N zur Zwischenspeicherung und zum späteren Abrufen vom Gerät U1 aus übergeben.

Diese Einrichtung IN kann hier sowohl eine Einrichtung des "Intelligent Network", als auch das Internet sein. Entscheidend ist hier nur, daß einerseits Daten in diese Einrichtung eingegeben werden können und daß andererseits diese Daten später gezielt wieder abgerufen werden können. Fragen der Berechtigung, der Übertragungssicherheit und dergleichen werden hier nicht berücksichtigt, können aber selbstverständlich unabhängig von der Erfindung mit berücksichtigt werden.

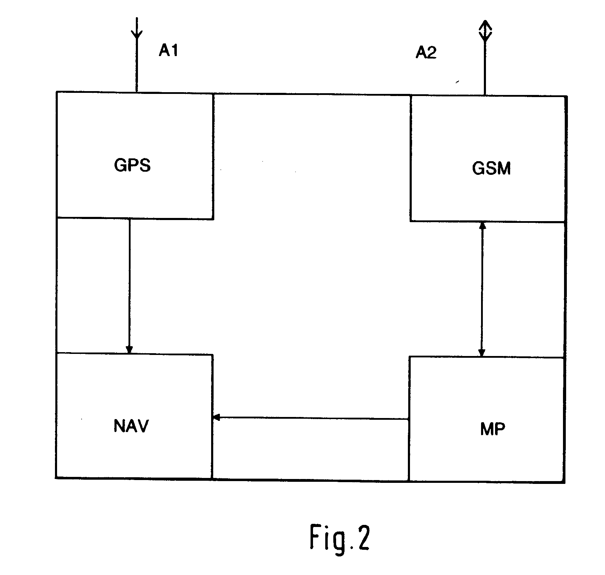

Anhand der Figur 2 wird nun beispielhaft ein Gerät der Verkehrstelematik als Beispiel für ein erfindungsgemäßes Gerät U1 beschrieben.

Das Gerät nach Figur 2 weist ein Kommunikationsmittel GSM, einen Satelliten-Navigationsempfänger GPS, ein Mobiltelefonteil MP und eine Navigationseinrichtung NAV auf. Das Kommunikationsmittel GSM ist mit einer Sende- und Empfangsantenne A2, der Satelliten-Navigationsempfänger NAV mit einer Empfangsantenne A1 versehen.

Das Kommunikationsmittel GSM ist hier im wesentlichen ein nichtstationäres Funktelefon nach der bekannten GSM-Norm. (GSM ist heute als Name und nicht mehr als Abkürzung zu verstehen. GSM wurde schon als Abkürzung von Groupe Spéciale Mobile und von Global System for Mobile Communications angesehen.) An sich kann hierfür aber jedes geeignete Funktelefon verwendet werden.

Der Satelliten-Navigationsempfänger GPS arbeitet mit dem bekannten Global Positioning System, einem Netz von Navigationssatelliten, zusammen. Solche Empfänger sind an sich bekannt. Dieser Satelliten-Navigationsempfänger GPS gibt laufend die aktuellen Koordinaten der augenblicklichen Position an.

Die Navigationseinrichtung NAV ist in diesem Beispiel in der Lage, aus dem eingegebenen Ziel und der augenblicklichen Position selbständig eine Richtungsempfehlung abzugeben. Zu diesem Zweck ist in an sich bekannter Weise eine elektronisch auswertbare Straßenkarte vorhanden. Die erforderlichen Daten müssen in einer geeigneten Form und in geeignetem Umfang vorliegen, wobei die Daten der augenblicklichen Position vom Satelliten-Navigationsempfänger geliefert werden.

Eine derartige Navigationseinrichtung ist als "Fahrer-Informationssystem" bekannt aus dem Zeitschriftenartikel ,,Navigationstechnik fürs Auto", erschienen in Heft 5/96 der deutschen Zeitschrift ,,Funkschau" auf den Seiten 74 bis 79. Auf Seite 76 wird anhand von vier Bildern gezeigt, wie bei einem der vorgestellten Beispiele "Ort und Straße ... über ein Buchstabenmenü auf dem Bildschirm ... eingegeben" werden. Auf Seite 74, mittlere Spalte unten, wird ausgesagt, daß "zum Fahrkomfort ... auch die Direktanwahl von wichtigen Zielen, sei es von Flughäfen, ... " zählt. Eine einfache Zielvorgabe ist eine wichtige Voraussetzung für eine insgesamt einfache Verwendung einer solchen Navigationseinrichtung.

Den Mobiltelefonteil MP könnte man prinzipiell auch dem Kommunikationsmittel GSM zuordnen. Mit der Auftrennung soll nur angedeutet werden, daß der Sprachteil nicht unbedingt erforderlich ist, um das erfindungsgemäße Verfahren durchzuführen.

Erfindungsgemäß werden nun die weiterhin zur Fahrtrichtungsempfehlung erforderlichen Daten zumindest des nächsten Fahrtziels über die Kommunikationseinrichtung GSM von der intelligenten Einrichtung IN abgerufen und dem Navigationsteil NAV übergeben. Der Abruf kann manuell ausgelöst werden, bevorzugt jedoch automatisch bei Inbetriebnahme des Kraftfahrzeugs. Wenn dies vorgesehen ist, können hierbei auch Parameter für den Mobiltelefonteil MP abgerufen und in diesen einprogrammiert werden. Beispielsweise können dies Kurzwahlziele, Rufnummernfilter oder Terminfunktionen sein.

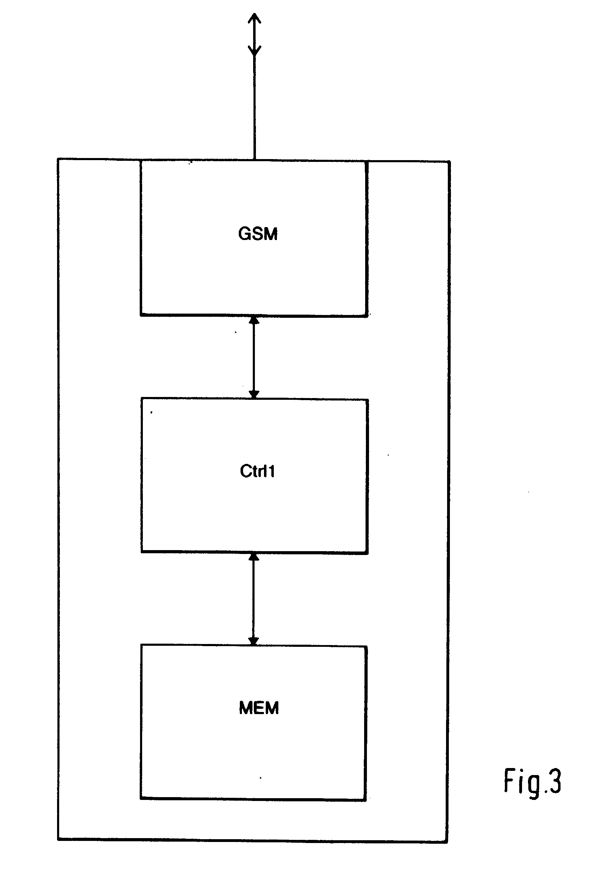

Anhand der Figur 3 wird nun ein Handfunktelefon als weiteres Beispiel eines erfindungsgemäßen Geräts U1 beschrieben.

Prinzipiell enthält das Handfunktelefon nach Figur 3 dieselben Baugruppen, wie das Kommunikationsteil GSM und das Mobiltelefonteil MP des Geräts nach Figur 2. Die Funktionen des Mobiltelefonteils MP sind hier aufgeteilt auf eine Steuerungsbaugruppe Ctrl1 und eine Speicherbaugruppe MEM. Die separate Darstellung der Speicherbaugruppe MEM soll die Programmierbarkeit, sogar Fernprogrammierbarkeit des Telefonteils zum Ausdruck bringen, was im Fall des Verkehrstelematikgeräts nach Figur 2 auch in der erfindungsgemäßen Ausführung nicht zwingend erforderlich ist.

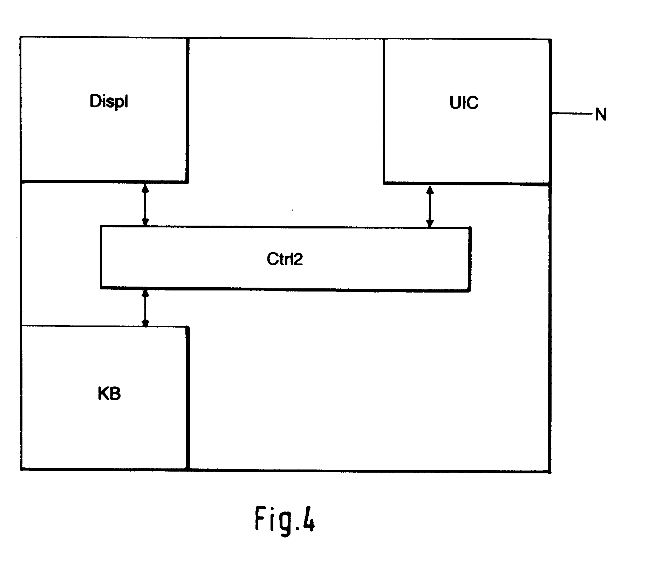

Anhand der Figur 4 soll nun abschließend noch ein Beispiel für ein Gerät U2 gezeigt werden, mittels dessen die zur Eingabe in das Gerät U1 vorgesehenen Parameter aufbereitet und an die intelligente Einrichtung IN übergeben werden können.

Das Gerät nach Figur 4 weist eine Steuerbaugruppe Ctrl2 und daran angeschlossen eine Anzeigeeinrichtung Displ, eine Tastatur KB und eine Anschlußeinrichtung UIC auf. Über die Anschlußeinrichtung UIC erfolgt der Anschluß an das Fernmeldenetz N.

Die Anschlußeinrichtung UIC erfüllt die übertragungstechnischen Funktionen. Im Falle eines Anschlusses an das ISDN (Integrated Services Digital Network) kommt hierfür beispielsweise die Schnittstellenschaltung für die Schnittstelle U (UIC = U Integrated Circuit) zum Einsatz.

Die Steuerbaugruppe Ctrl2, die Anzeigeeinrichtung Displ und die Tastatur KB werden beispielsweise durch einen üblichen PC gebildet. Das Programm in- der Steuerbaugruppe Ctrl2 erfüllt hier die beschriebenen erfindungsgemäßen Funktionen. Über die Anschlußeinrichtung UIC ist dieser PC in bekannter Weise an das Fernmeldenetz N angeschlossen.

Einrichtungen, die als intelligente Einrichtung IN verwendet werden können, sind als solche ist hinreichend bekannt. Hier ist ohnehin nur die Zwischenspeichermöglichkeit und die gezielte Abrufbarkeit von Bedeutung. Diese Möglichkeit ist beispielsweise im Internet bekanntermaßen gegeben. Auch vom Netzbetreiber kann dies im Rahmen des "Intelligent Network" problemlos angeboten werden. Auch ein völlig unabhängiger Dienstleistungsanbieter kann problemlos mit bekannten Mitteln eine Diensteanbietereinrichtung bilden und damit diesen Dienst anbieten.

## Patentansprüche

1. Verfahren zur Eingabe von Parametern in ein erstes Gerät (U1), das an das Fernmeldenetz (N) angeschlossen oder zumindest anschließbar ist, insbesondere zur Eingabe in ein Gerät der Verkehrstelematik (Fig. 2) oder ein Hand- oder Mobilfunktelefon (Fig. 3), bei welchem Verfahren die Parameter zunächst in einem zweiten Gerät (U2), insbesondere einem festnetzseitigen Endgerät, zur Eingabe in das erste Gerät (U1) aufbereitet und dann vom zweiten Gerät (U2) über das Fernmeldenetz (N) an das erste Gerät (U1) übergeben werden, **dadurch gekennzeichnet, daß** die Übergabe der Parameter unter Einbeziehung einer im Fernmeldenetz (N) befindlichen intelligenten Einrichtung (IN) erfolgt und daß die Einbeziehung der intelligenten Einrichtung (IN) derart erfolgt, daß die zu übergebenden Parameter von der Eingabe durch das zweite Gerät (U2) bis zur Weitergabe an das erste Gerät (U1) dort zwischengespeichert werden.

2. Verfahren nach Anspruch 1, dadurch gekennzeichnet, daß das Internet die Funktion der intelligenten Einrichtung erfüllt.

3. Verfahren nach Anspruch 1, dadurch gekennzeichnet, daß die intelligente Einrichtung eine Diensteanbietereinrichtung eines Dienstleistungsanbieters ist.

4. Gerät (U1), dessen Arbeitsweise von Parametern abhängt, die vorab einzugeben sind, mit einer Anschlußeinrichtung (GSM) zum Anschluß an das Fernmeldenetz (N), insbesondere ein Gerät der Verkehrstelematik (Fig. 2) oder ein Hand- oder Mobilfunktelefon (Fig. 3), **dadurch gekennzeichnet**, daß das Gerät (U1) derart eingerichtet ist, daß die Parameter über die Anschlußeinrichtung (GSM) eingebbar oder abrufbar sind und daß so eingegebene Parameter als aktuelle Parameter übernommen werden.

5. Gerät nach Anspruch 4, dadurch gekennzeichnet, daß das Gerät ein Gerät der Verkehrstelematik ist und daß die Parameter Angaben über Fahrroute und Fahrziel enthalten (Fig. 2).

6. Gerät nach Anspruch 4, dadurch gekennzeichnet, daß das Gerät ein Hand- oder Mobilfunktelefon ist und daß die Parameter Angaben über Kurzwahlziele, Rufnummernfilter, Terminfunktionen oder dergleichen enthalten (Fig. 3).

7. Gerät (U2), insbesondere festnetzseitiges Endgerät, mit einer Anschlußeinrichtung (UIC) zum Anschluß an das Fernmeldenetz (N) und mit Eingabemitteln (KB) zum Eingeben von Parametern, wobei das Gerät derart eingerichtet ist (Ctrl2), daß die Parameter über die Anschlußeinrichtung (UIC) an eine im Fernmeldenetz (N) befindliche intelligente Einrichtung (IN) übertragbar sind.
